Europäisches Patentamt

European Patent Office

Office européen des brevets

(19)

(11) Publication number: **0 259 003**
A2

# EUROPEAN PATENT APPLICATION

(12)

(21) Application number: 87306761.5

(22) Date of filing: 30.07.87

(51) Int. Cl.⁴: **B29C 67/20** , B29C 59/00 , B29C 59/10 , B26F 1/00 , //B29L7:00

(30) Priority: 04.08.86 US 892667

(43) Date of publication of application: 09.03.88 Bulletin 88/10

(84) Designated Contracting States: DE FR GB GR IT

(71) Applicant: **EL PASO PRODUCTS COMPANY** 1400, South Grandview Avenue Odessa Texas 79761(US)

(72) Inventor: **Douglas, Noel Lawrence** 1023 Warren Street Chippewa Falls Wisconsin 54729(US)

(74) Representative: **Myerscough, Philip Boyd et al** J.A.Kemp & Co. 14, South Square Gray's Inn London, WC1R 5EU(GB)

(54) **Process for the manufacture of microporous film.**

(57) A microporous film suitable for diaper back sheets and other disposable applications is produced by first abrading an unoriented film by passing it through at least one set of at least two cooperating nip rollers, at least one nip roller having an abrasive grit surface, and then subjecting the abraded film to a corona treatment.

EP 0 259 003 A2

## "PROCESS FOR THE MANUFACTURE OF MICROPOROUS FILM"

Porous films have been produced in the past by a number of processes. One group of such processes comprises forming a film of a thermoplastic resin composition containing a noncompatible filler and then stretching the film in one or more directions to impart a microporous structure to the film. Examples of these techniques are disclosed in US-A-4,472,328 and GB-A-2,151,538. Generally, the physical properties, especially the strength and the hydrostatic pressure resistance, of the films so produced are not as good as would be desired.

Other processes have been disclosed for manufacture of porous films, which processes comprise forming an unfilled thermoplastic resin film and then passing the film through the nip of two rollers, one of these having a smooth, often heated surface and the other having either projections in its surface as in US-A-3,073,304 or an abrasive surface coating as in US-A-3,718,059. These latter processes have not been entirely successful because of the manufacturing cost of the rollers having surface projections and also because of operational problems causing undesired large variations in the film pore diameters. In addition the improvements in the moisture vapor transmission rates have been less than desired using the smooth pressure roller techniques.

US-A-4,364,985 discloses a process for preparing a porous, filled thermoplastic film, which process requires the particles of the filler to extend from one film surface to the other. The filled film is passed over a set of serially positioned abrading rollers for the purpose of rubbing off the surfaces of the film that overlie the outermost portions of the filler particles. A drawback of this method is that the average filler particle size has to be about equal to the film thickness, which obviously limits the process to the production of thin films only.

US-A-3,880,966 discloses a process for the manufacture of microporous films which involves the corona treatment of a nonporous elastic starting film followed by a series of necessary steps comprising cold stretching, hot stretching and heat setting to render the corona-treated film microporous.

The present invention provides a process for the production of a microporous film having an improved moisture vapor transmission rate and an acceptable hydrostatic pressure resistance.

In accordance with the present invention there is provided a process for the production of a microporous film which comprises passing an unoriented film prepared from a high molecular weight thermoplastic resin composition through at least one set of at least two cooperating nip rollers, at least one nip roller being provided with an abrasive surface, subjecting the abraded film to a corona discharge treatment, and recovering the microporous film directly after the corona discharge treatment.

The high molecular weight thermoplastic resin can be any alpha-olefin based component from which films and sheets which are foldable, soft and relatively strong can be produced. Suitable resin components are high molecular weight polyethylenes, linear low polyethylenes, polypropylene, polybutylene and ethylene-propylene copolymers. Mixtures of such resin components may be used.

For diaper linings and other clothing and sanitary applications, a particularly suitable resin comprises 65 to 95 wt % of a low density polyethylene having a density of 0.910 to 0.935 gms/cm$^3$, and at least 5 wt % of at least one resin component selected from high density polyethylene having a density exceeding 0.940 g/cm$^3$, a linear low density polyethylene of a density 0.915 to 0.945 gms/cm$^3$ and high molecular weight polybutylene. The linear low density polyethylene is an interpolymer of ethylene and one or more $C_4$-$C_{12}$ alpha-olefins. Especially preferred are the copolymers of ethylene with hexene-1 and/or octene-1. The melt index of the total resin should be between 0.5 and 10 g/10 min.

The resin composition preferably also contains a filler, such as calcium carbonate, barium sulfate, mica, polytetrafluoroethylene and titanium dioxide. The concentration of the filler should be between 5 and 25 parts by weight per 100 parts by weight of the resin. Preferably, the filler is calcium carbonate having a average particle size between 3 and 30 $\mu$m.

For appearance, the resin composition usually contains a whitener such as titanium dioxide pigment when titanium dioxide is not the principal filler. The concentration thereof is generally maintained between 3 and 16 parts by weight per 100 parts by weight of the resin.

Other additives such as antioxidants, lubricants and stabilizers may also be added for their known purposes and in conventional quantities.

The film can be produced by any known commercial process, e.g. by casting or blown film techniques. The film thickness should be between 23 and 150 $\mu$m (0.9 mil and 6 mil). Prior to treatment according to the process of this invention, the film may be subjected to an embossment or other treatment to impart a decorative pattern onto the surface of the film.

The abrasive nip rollers have a surface which is usually provided in the form of coating with an abrasive material such as sand paper, emery cloth, garnet paper or aluminum oxide. The abrasive typically has a grit size ranging between 80 and 250 grain. it is not necessary that the entire surface of the roller be covered with the abrasive. The pressure at the nip of the rollers can vary between 6.9 and 69 kPa gauge (10 psig and 100 psig). The temperature is maintained at ambient conditions.

It is not necessary that a set of the cooperating nip rollers have equal roller diameters, and one roller can have a larger diameter than the other. It is also possible to have one larger roller in cooperative relationship with more than one other abrasive roller of smaller diameter. For instance, the equivalence of five serially positioned nips can be accomplished by passing the film over a nip roller partially surrounded by and in cooperative relation with five abrasive nip rollers of smaller diameter. Also, the conductive roller used in the subsequent corona discharge treatment can serve as a nip roller in cooperative relationship with an abrasive roller.

The abrasion treatment should be carried to produce a film having a moisture vapor transmission rate (MVTR) of at least 100, preferably between 500 and 1500, $g/m^2/24$ h. At lower than 100 MVTR the subsequent corona discharge treatment does not have any significant effect upon enhancing the rate.

The corona discharge treatment follows the abrading step directly without any intermediate hot drawing or cold drawing steps. Nor should any of these drawing operations follow the corona discharge treatment. In exposing the film to corona discharge, it is passed between a pair of electrodes, one of which is in the form of a grounded metallic roller or stationary bar and which cooperates with the other electrode connected to a suitable high voltage, high frequency power source. The latter electrode is spaced from and parallel to the grounded electrode establishing a uniform air gap between the electrodes. The spacing is usually maintained below 0.6 cm (0.25 inches) and preferably between 0.013 and 1.5 mm (0.0005 and 0.06 inches).

The electrode receiving the high voltage operating potential may consist of a series of metal hinges having finely serrated edges evenly spaced across the width of the electrode. Alternatively, the electrode may be in the form of a series of brass brushes. The potential between the electrodes suitably is maintained betwen 3000 and 50,000 volts and a suitable current is between 0.35 and 5 amperes. The treatment is typcially carried out at a frequency of from 50 KHz to 60 KHz.

The films produced by the process of this invention have excellent properties making them especially useful in disposable film applications, such as diaper back sheets. Specifically, the films exhibit excellent moisture vapor transmission rates while having an acceptable hydrostatic pressure resistance. Because no stretching or orientation is required to provide the desired porosity, the physical properties are virtually unaffected and remain at desired high levels. Also, the appearance of the film products of the invention, as measured by opacity, softness and gloss, is very good.

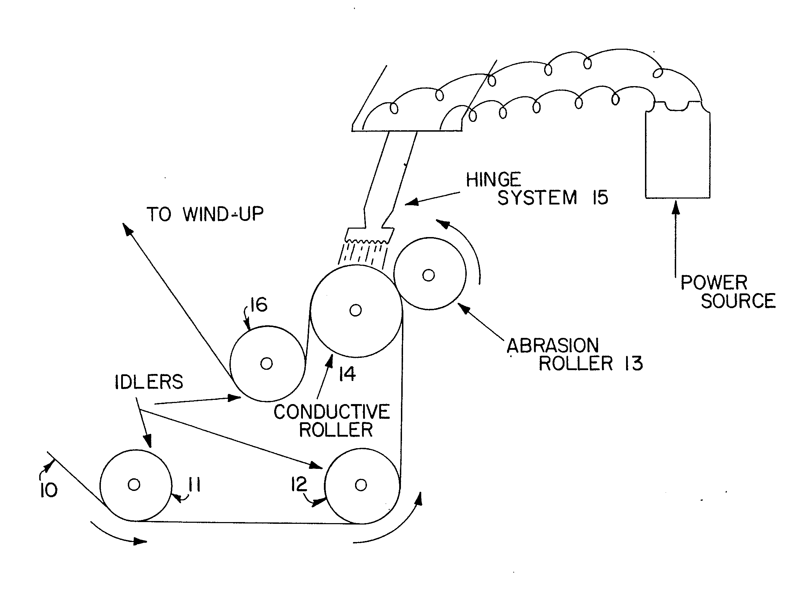

Reference is now had to the Figure which schematically depicts an embodiment of the process of the invention.

Plastic film 10, fed from a supply (not shown) and guided by idler rollers 11 and 12, is passed through the nip between abrasive roller 13 and the conductive roller 14, which is grounded (not shown). At 15 there is shown a hinged electrode, which is electrically connected to a suitable high frequency, high voltage power source. The electrode is spaced from the conductive roller and is parallel to the conductive roller axis thereby establishing a uniform air gap between the electrode and the film passing over the roller. The electrostatically treated film having an enhanced microporous structure is guided by roller 16 to wind-up.

For a better understanding of the invention reference is had to the following Examples.

EXAMPLE 1

A blend was prepared from 75 wt % low density polyethylene (0.918 $g/cm^3$ density, 1.2 MI), 5 wt % high molecular weight polybutylene and 20 wt % calcium carbonate (particle size of 3 $\mu$m). A 25 $\mu$m (1.1 mil) cast film was produced from this blend and subsequently embossed to produce a patterned film having a thickness of about 56 $\mu$m (2.2 mil). The embossed film was subjected to abrasion without any stretching or orientation in any direction prior to the treatment. The abrasion treatment was carried out by passing the film ten times through the nip of two rollers covered uniformly with 80 grit sand paper at a nip pressure of 0.3 MPa (40 psi). Each of the rollers had a length of 33.7 cm (13.25 inches) and a diameter of 10 cm (4 inches). The speed of each of the rollers was 122 m (400 feet) per minute and the film passed through the nip at the same rate. The abraded film had a MVTR of about 1250 $g/m^2/24$ h, over a 60 fold increase over that of the embossed film before the abrasion treatment.

## EXAMPLE 2

The abraded film of Example 1 was subsequently subjected 2 times to a corona discharge treatment by passing the film over a conductive roller at a speed of 122 m (400 feet) per minute and using a hinged electrode connected to a high voltage power source. The electrode (Model No. 1242) was obtained from Electro Technic Products, Inc., 4644 North Ravenswood Avenue, Chicago, Illinois 60640. The spacing between the electrode and the conductive roller was about 0.05 mm (0.002 inches). The voltage used in the treatment was about 40,000 volts, the current 1 - 2 amperes and the frequency about 50 KHz.

As shown in the Table, which lists the pertinent physical properties of the treated films of Examples 1 and 2, the moisture vapor transmission rate was considerably increased by the corona discharge treatment, i.e. from 1250 g/m2/24h to over 2000 g/m2/24h without any significant alteration in the other physical properties.

## EXAMPLE 3

The starting film of Example 1 was subjected directly, that is without the abrasion treatment described in Example 1, to the corona discharge treatment described in Example 2. No significant improvement in the moisture vapor transmission rate was obtained, the unabraded film having an MVTR of 20 g/m2/24h before the corona discharge treatment and an MVTR of only 60 g/m2/24h after such treatment.

### TABLE

| EXAMPLE NO. | 1 | 2 |
|---|---|---|
| Film Thickness | | |
| Initial – $\mu$m (mil) | 28 (1.1) | |
| Embossed – $\mu$m (mil) | 56 (2.2) | 66 (2.6) |
| MI – g/10 min | --- | --- |
| Opacity ASTM D-1003 | 88 | 88 |
| Gloss ASTM D-245 | 4.0 | 4.0 |
| Elongation M.D. – % | 50 | 50 |
| T.D. – % | 45 | 45 |
| Tensile Strength M.D.– MPa(psi) | 10.5 (1520) | 10.7 (1550) |
| T.D.–MPa(psi) | 8.41 (1220) | 8.55 (1240) |
| 1% Secant Modulus M.D.–MPa(psi) | 52.6 (7630) | 52.1 (7560) |
| T.D.–MPa(psi) | 66.02(9575) | 64.5 (9350) |
| Tear Strength M.D.–KPa(psi) | 124 (18) | 124 (18) |
| T.D.–MPa(psi) | 0.76 (110) | 0.76 (110) |
| Coeff. of Friction | 0.36 | 0.36 |
| Spencer Impact g/25.4 $\mu$m (mil) | 45 | --- |
| MVTR g/m$^2$/24 h | 1250 | 2011 |
| Hydrostatic resistance | 30 | 30 |

## Claims

1. A process for the production of a microporous film which comprises passing an unoriented film prepared from a high molecular weight thermoplastic resin composition through at least one set of at least two cooperating nip rollers, at least one nip roller being provided with an abrasive surface, subjecting the abraded film to a corona discharge treatment between two electrodes, and recovering the microporous film directly after the corona discharge treatment.

2. A process according to claim 1 wherein the abraded film prior to corona discharge treatment had a moisture vapor transmission rate of at least 100 g/m$^2$/24 h.

3. A process according to claim 1 or 2 wherein the pressure at the nip of the rollers is between 6.9 and 69 KPa gauge (10 and 100 psig).

4. A process according to claim 1, 2 or 3 wherein the abrasive has a grit size between 80 and 250 grain.

5. A process according to any one of the preceding claims wherein the potential between the electrodes is maintained during corona discharge treatment between 3000 and 5000 volts.

6. A process according to any one of the preceding claims wherein the corona discharge treatment is carried out using a current between 0.35 and 5 amperes.

7. A process according to any one of the preceding claims wherein the corona discharge treatment is carried out at a frequency between 50 and 60 KHz.

8. A process according to any one of the preceding claims wherein the thermoplastic resin composition comprises at least one of polyethylene, linear low polyethylene, polypropylene, polybutylene and ethylenepropylene copolymers.

9. A process according to claim 8 wherein the resin comprises from 65 to 95 wt % of a low density polyethylene having a density of 0.910 to 0.935 gm/cm$^3$ and at least 5 wt % of at least one resin component selected from high density polyethylene having a density exceeding 0.940 g/cm$^3$, a linear low density polyethylene having a density of 0.915 to 0.945 g/cm$^3$ and a high molecular weight polybutylene.

10. A process according to any one of the preceding claims wherein the thermoplastic resin composition comprises as filler at least one of calcium carbonate, barium sulfate, mica, polytetrafluoroethylene and titanium dioxide in amount between 5 and 25 parts by weight per 100 parts by weight of the resin.

11. A process according to claim 10 wherein the average particle size of the filler is from 3 to 30 μm.

12. A process according to any one of the preceding claims wherein the resin composition contains a whitener pigment in an amount from 3 to 16 parts by weight per 100 parts by weight of resin.

TO WIND-UP

HINGE SYSTEM 15

POWER SOURCE

IDLERS

16

14

CONDUCTIVE ROLLER

ABRASION ROLLER 13

10

11

12

0 259 003